# NEW EUROPEAN PATENT SPECIFICATION

(11) **EP 0 347 260 B2**
(45) Date of publication and mention of the opposition decision: **12.06.1996**
(45) Mention of the grant of the patent: 01.09.1993
(21) Application number: 89306166.3
(22) Date of filing: 19.06.1989
(51) Int. Cl.: B60K 5/02, B60K 17/04

(54) **Drive system for vehicles**
Antriebssystem für Fahrzeuge
Système d'entraînement pour véhicule

(30) Priority: 17.06.1988 JP 149867/88
(43) Date of publication of application: 20.12.1989
(73) Proprietor: HONDA GIKEN KOGYO KABUSHIKI KAISHA, Minato-ku, Tokyo (JP)
(72) Inventor: Kazama, Akio, Fujimi-shi Saitama (JP)
(74) Representative: Piesold, Alexander J.

(56) References cited:
- DE-C- 3 323 626
- GB-A- 1 190 167
- US-A- 3 052 313
- US-A- 3 213 958
- US-A- 3 494 225
- ATZ, Automobiltechnische Zeitschrift 87 (1985) 9, pages 395-400

## Description

The present invention relates to a drive system for a vehicle according to DE-C-33 23 626 and as defined in the preamble of claim 1.

There are prior art vehicles having a longitudinally disposed power plant which comprises an engine, a transmission, and a differential as a unit, and which transmits output power to drive wheels through an intermediate transmission shaft extending through and supported in the power plant (see Japanese Patent Publication No. 48-13015, U.S. Patent 3,494,225, British Patent 1,032,090 and German patent 1,555,101).

The conventional vehicle drive systems, such as the Japanese Patent Publication 48-13015, have several problems. Since the oil pan and the differential case, which are separate from each other, are separately mounted on the cylinder block, the cylinder block must have attachment regions for attaching the differential case as well as the oil pan. However, the cylinder block is required to have higher accuracy and more excellent physical properties than the oil pan and the differential case. Since the cylinder block is complex in configuration and structure and very large, the prior art arrangements resulted in a substantial increase in the cost of the entire engine. Moreover, since the cylinder block and the differential are positioned on one side of the crankshaft and are heavy, the prior art layout makes the weight balance of the overall engine very poor, whereby the power plant will vibrate during operation, especially during high-speed operation.

In view of the above shortcomings of the conventional drive systems, it is an object of the present invention to provide a drive system for a vehicle which will reduce the complexity of the cylinder block, produce a better weight balance, and reduce the cost of the power plant.

GB-A-1190167 discloses an arrangement in which the engine cylinders are substantially horizontal. The final drive gear of the arrangement is mounted on a cover of the engine crankcase which also form the case for the final drive. An oil sump is provided on the bottom of the crankcase of the engine.

According to the invention, there is provided a drive system as defined in claim 1.

With such an arrangement, the differential may be disposed remote from the inclined cylinder block and, as a result, the entire drive system may be well balanced in weight. Furthermore the cylinder block, which is required to have a higher degree of accuracy than the oil pan and the differential case and to be made of a material having better physical properties than those parts, may be made simpler in construction and configuration and smaller in size. Therefore, the engine itself, which is the drive unit of the power plant, may be reduced in cost.

An embodiment of the present invention will hereinafter be described with reference to the drawings, wherein:

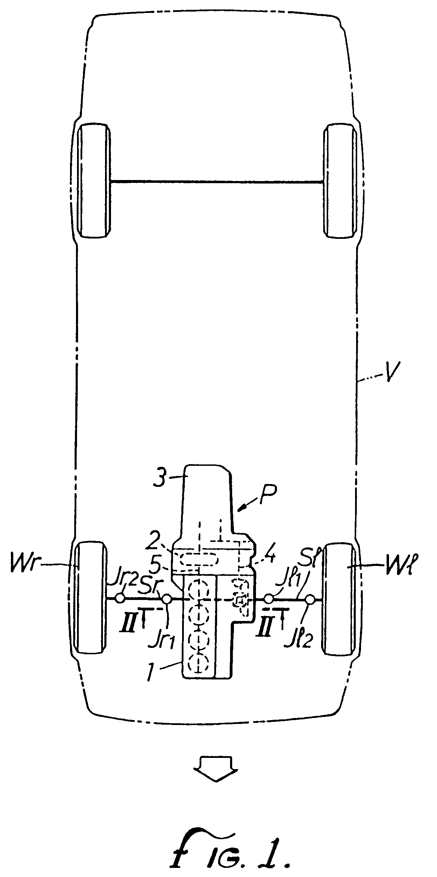

FIG. 1 is a schematic plan view of a drive system for a vehicle according to the present invention;
FIG. 2 is detailed cross-sectional front elevation view taken along the line II-II in Fig. 1;
FIG. 3 is a fragmentary cross-sectional plan view taken along the line III-III in Fig. 2; and
FIG. 4 is a fragmentary cross-sectional plan view taken along the line IV-IV in Fig. 2.

In this embodiment of the invention, a power plant P comprising an engine 1, a clutch (or torque converter) 2, a transmission 3, and a differential D as a unit is longitudinally installed on a vehicle V (i.e., the engine 1 has a crankshaft 5 extending parallel to the longitudinal axis of the vehicle V). The output power from the power plant P is transmitted through universal joints Jℓ₁, Jr₁, drive axles Sr, Sℓ, and universal joints Jℓ₂ Jr₂, to laterally spaced front wheels Wr, Wℓ as drive wheels.

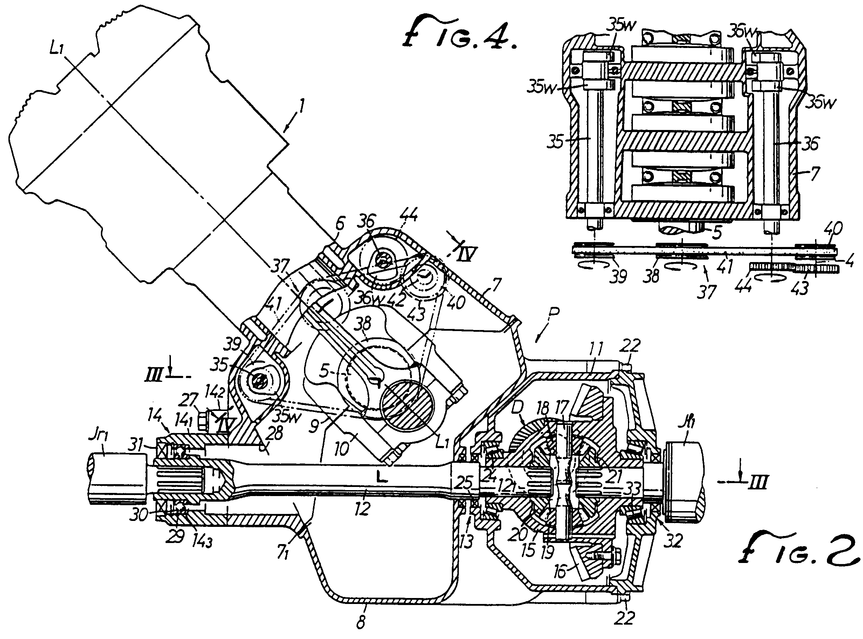

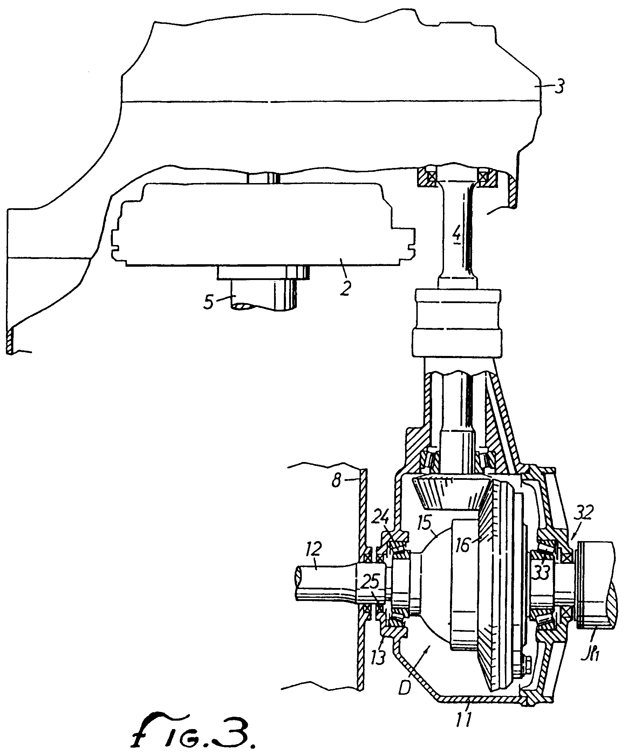

As shown in FIGS. 2 and 3, the engine 1, which is the drive unit of the power plant P, has a cylinder axis L₁ - L₁ inclined (at about 45°) from the vertical in one of lateral directions of the vehicle V (i.e., to the right-hand side as viewed in the direction in which the vehicle V runs forwardly). Thus, the cylinder block 6 of the engine 1 is inclined in the same direction. The cylinder block 6 includes a crankcase 7 in its lower portion. The crankcase 7 has an open lower surface 7₁ which is inclined along a plane normal to the cylinder axis L₁ -L₁. An oil pan 8 is joined to the inclined open lower surface with a seal member interposed therebetween. The oil pan 8 has a concave outer surface extending along the crankshaft 5 and facing away from the direction in which the cylinder block 6 is inclined. A differential case 11 housing a differential D is disposed closely and parallel to the concave outer surface of the oil pan 8. The differential case 11 is fixed to the outer surface of the oil pan 8 by means of a plurality of bolts 22.

The crankshaft 5 is rotatably supported in the crankcase 7 by means of bearing members 9 and bearing caps 10 fixed to the bearing members 9.

An intermediate transmission shaft 12 which lies substantially perpendicularly to the crankshaft 5 extends substantially horizontally through the crankcase 7, the oil pan 8, and the differential case 11. The intermediate transmission shaft 12 has one end rotatably supported in the crankcase 7 by a bearing holder 14 (described in detail below) and the other end rotatably supported in a bearing region 13 in the differential case 11 by means of a taper roller bearing 24. That other end of the intermediate transmission shaft 12 extends through the taper roller bearing 24 into the differential case 11 and is coupled to a pinion driver gear 20 of the differential D. The differential D is positioned away from the inclined cylinder block 6, as described above. Therefore, the cylinder block 6 and the differential D, both of which are heavy, are disposed on opposite sides of the crankshaft 5, making the power plant P well balanced as a whole. The differential D is of a known structure comprising a differential housing 15 rotatably supported in the differential case 11 by means of taper roller bearings 24, 33, a large-diameter driven gear 16 fixed to an outer periphery of the differential housing 15 and operatively coupled to a propeller shaft 4 extending from the transmission 3, a pair of differential pinion gears 18, 19 supported in the differential housing 15 by means of a pin 17, and a pair of pinion driver gears 20, 21 meshing with the differential pinion gears 18, 19. The pinion driver gear 20 is splined to the inner end 12₁ of the intermediate transmission shaft 12. The other pinion driver gear 21 is splined to the universal joint Jℓ₁ .The bearing region 13 includes an oil seal 25 near the taper roller bearing 24, providing an oil tight seal between the intermediate transmission shaft 12, and the differential case 11. A similar oil seal is provided between the intermediate shaft 12 and the oil pan 8 adjacent the seal 25.

A bearing region 32 is disposed on an outer wall of the differential case 11 in axially opposite relation to the bearing region 13. The inner end of the universal joint Jℓ₁ is rotatably supported by roller bearing 33 in the bearing region 32. The inner end of the universal joint Jℓ₁ projects into the differential case 11, extends through the differential housing 15 of the differential D, and is splined to the pinion driver gear 21. The universal joint Jℓ₁ is coupled to the left-hand drive wheel Wℓ through the drive axle Sℓ and the other universal joint Jℓ₂.

The bearing holder 14 is separate from the engine 1 and includes a bearing sleeve 14₁ having a plurality of attachment arms 14₂. The bearing holder 14 is detachably fixed to an outer peripheral surface of the crankcase 7 by bolts 27 extending through bolt holes (not shown) defined in the respective attachment arms 14₂ and threaded into the wall of the crankcase 7. The outer end of the intermediate transmission shaft 12 which projects outwardly through a hole 28 defined in the crank-case 7 is rotatably supported in, the bearing sleeve 14₁ by a ball bearing 29. The ball bearing 29 is retained in the bearing holder 14 by a step 14₃ in the bearing sleeve 14₁ and a circlip or retaining ring 30 fitted in the bearing holder 14. An oil-tight seal is provided between the bearing sleeve 14₁ and the intermediate transmission shaft 12 by means of an oil seal 31 fitted in the bearing sleeve 14₁ close to the ball bearing 29.

The universal joint Jℓ₁ is splined to the outer end of the intermediate transmission shaft 12, and the right-hand drive wheel Wr is coupled to the universal joint Jr through the drive axle Sr and the other universal joint Jr₂.

As illustrated in FIGS. 2 and 4, a pair of balancer shafts 35, 36 parallel to the crankshaft 5 are rotatably supported in the crankcase 7 of the cylinder block 6, with one of the balancer shafts 35, 36 being disposed on each side of the crankshaft 5. The balancer shafts 35, 36 have respective weights 35w, 36w. The balancer shafts 35, 36 are operatively coupled to the crankshaft 5 through a timing transmission device 37 to rotate in opposite directions.

The timing transmission device 37 comprises a driver pulley 38 fixed to the crankshaft 5, a first driven pulley 39 fixed to one of the balancer shafts 35, a second driven pulley 40 fixed to an intermediate transmission shaft 42 rotatably supported in the crankcase 7 close and parallel to the other balancer shaft 36, an endless timing belt 41 trained around the driver and driven pulleys 38, 39, 40, a driver gear 43 fixed to the intermediate transmission shaft 42 adjacent to the second driven pulley 40, and a driven gear 44 fixed to the balancer shaft 36 and held in mesh with the driver gear 43. The number of teeth of each of the first and second driven pulleys 39, 40 is half of the number of teeth of the driver pulley 38, and the gears 43, 44 have the same number of teeth. when the crankshaft 5 is rotated, the balancer shafts 35, 36 are rotated in mutually opposite directions at a speed which is twice the speed of rotation of the crankshaft 5 for canceling out the secondary inertial force of the reciprocating mass of the engine 1 with the combined centrifugal forces of the weights 35w, 36w.

The operation of the drive system now will be described. When the engine 1 of the power plant P is operated, the output power thereof is transmitted from the clutch 2 and the transmission 3 through the propeller shaft 4 to the differential D, from which it is transmitted through the intermediate transmission shaft 12, the universal joint Jr₁, the drive axle Sr, and the other universal joint Jr₂ to the right-hand drive wheel Wr, and from which it also is transmitted through the universal joint Jℓ₁, the drive axle Sℓ, and the other universal joint Jℓ₂ to the left-hand drive wheel Wℓ.

The differential case 11 is a separate component from the oil pan 8 and is coupled in parallel relation to the oil pan 8 which in turn is joined to the lower portion of the cylinder block 6. The cylinder block 6 is therefore not required to have any attachment region for attaching the differential case 11 thereto. Thus, the cylinder block 6 is simplified in configuration and construction, and is compact.

The cylinder block 6 is required to be more accurate in dimensions, machining, etc., and have better physical properties than the oil pan 8 and the differential case 11. With the cylinder block 6 being simpler in configuration and construction and more compact, as described above, the cost of manufacture of the engine is greatly reduced. In addition, the cylinder block and the differential case can be made of different materials.

The overall height and the center of gravity of the power plant P are lowered by tilting the cylinder block 6 of the engine 1 in one lateral direction of the vehicle V. The differential D is disposed remotely from the inclined cylinder block 6. Since the cylinder block 6 and the differential D, both of which are heavy, are located on respective sides of the crankshaft 5, the weight of the power plant P is well balanced. As a result, vibration of the power plant P during operation thereof is reduced, and the structure by which the power plant P is mounted on the vehicle body is simplified.

## Claims

1. A drive system for a vehicle (V) comprising a power plant (P) that includes an engine (1), a transmission (3), and a differential (D), with the power plant disposed longitudinally relative to the vehicle and operable to drive laterally spaced drive wheels (Wr, Wl) disposed on opposite sides of the power plant, wherein the engine has a cylinder block (6) inclined in one lateral direction of the vehicle, an oil pan (8) is removably joined to the cylinder block, a differential case (11) housing the differential and separate from the oil pan is coupled in parallel relation to and on a side of the oil pan which faces away from the direction in which said cylinder block is inclined, and an intermediate transmission shaft (12) extends through a wall of the oil pan, the plane of connection between the oil pan and the cylinder block, and a wall of the cylinder block, said differential and one of said drive wheels being operatively coupled to each other through said intermediate transmission shaft; characterized in that said intermediate transmission shaft has one end supported by a bearing (29) mounted in a bearing holder (14) mounted on the cylinder block on a side opposite to the location of said differential (D) and another end supported by a bearing (24) mounted on the differential case.

2. A drive system as claimed in claim 1, wherein said intermediate transmission shaft (12) passes through but is not supported by said oil pan (8).

3. A drive system as claimed in claim 1 or 2, wherein the bearing holder (14) is detachably mounted on the cylinder block.

4. A drive system as claimed in any preceding claim, wherein the intermediate transmission shaft is supported solely by the bearing (29) mounted in the bearing holder (14) and the bearing (24) mounted on the differential case.

5. A drive system as claimed in any preceding claim, wherein the intermediate transmission shaft (12) has its one end splined at a position within said bearing holder (14) to a member (Jr1) leading to said one of the driving wheels (Wr) and its another end splined to said differential (D) at a position within said differential case (11).

## Patentansprüche

1. Antriebssystem für ein Fahrzeug (V) mit einer Antriebsanlage (P), die einen Motor (1), ein Getriebe (3) und ein Differential (D) umfaßt, wobei die Antriebsanlage relativ zu dem Fahrzeug in Längsrichtung angeordnet ist und zum Antrieb mit seitlichem Abstand angeordneter Räder (Wr, Wl) betätigbar ist, die an entgegengesetzten Seiten der Antriebsanlage angeordnet sind, wobei der Motor einen in einer Querrichtung des Fahrzeugs geneigten Zylinderblock (6) aufweist, eine Ölwanne (8) mit dem Zylinderblock lösbar verbunden ist, ein das Differential aufnehmendes und von der Ölwanne getrenntes Differentialgehäuse (11) parallel zu und an derjenigen Seite der Ölwanne angebracht ist, die von der Richtung, in die der Zylinderblock geneigt ist, weg weist, und wobei eine Zwischenübertragungswelle (12) eine Wand der Ölwanne, die Verbindungsebene zwischen der Ölwanne und dem Zylinderblock und eine Wand des Zylinderblocks durchsetzt, wobei das Differential und eines der Antriebsräder durch die Zwischenübertragungswelle betriebsmäßig miteinander gekoppelt sind, **dadurch gekennzeichnet**, daß die Zwischenübertragungswelle mit ihrem einen Ende von einem Lager (29) gehalten ist, das in einem Lagerhalter (14) angebracht ist, der an dem Zylinderblock an einer der Stelle des Differentials (D) entgegengesetzten Seite angebracht ist, und mit ihrem anderen Ende von einem an dem Differentialgehäuse angebrachten Lager (24) gehalten ist.

2. Antriebssystem nach Anspruch 1, in dem die Zwischenübertragungswelle (12) die Ölwanne (8) durchsetzt, jedoch von dieser nicht gehalten ist.

3. Antriebssystem nach Anspruch 1 oder 2, in dem der Lagerhalter (14) an dem Zylinderblock entfernbar angebracht ist.

4. Antriebssystem nach einem der vorhergehenden Ansprüche, in dem die Zwischenübertragungswelle lediglich durch das in dem Lagerhalter (14) angebrachte Lager (29) und das an dem Differentialgehäuse angebrachte Lager (24) gehalten ist.

5. Antriebssystem nach einem der vorhergehenden Ansprüche, in dem die Zwischenübertragungswelle (12) mit ihrem einen Ende durch Keilnuten an einer Stelle innerhalb des Lagerhalters (14) mit einem Element (Jr1) verbunden ist, das zu dem einen der Antriebsräder (Wr) führt, und mit ihrem anderen Ende durch Keilnuten mit dem Differential (D) an einer Stelle innerhalb des Differentialgehäuses (11) verbunden ist.

## Revendications

1. Système d'entraînement pour un véhicule (V) comprenant un groupe moteur (P) comportant un moteur à combustion interne (1), une boîte de vitesses (3) et un différentiel (D), le groupe moteur étant disposé longitudinalement par rapport au véhicule et servant à entraîner des roues motrices (Wr, Wl) espacées transversalement et disposées de part et d'autre du groupe moteur, le moteur à combustion interne comportant un bloc-cylindres (6) incliné dans une direction transversale par rapport au véhicule, un carter d'huile (8) étant réuni d'une manière amovible au bloc-cylindres, un carter de différentiel (11) logeant le différentiel et distinct du carter d'huile, étant couplé parallèlement au carter d'huile et sur le côté de ce dernier qui est à l'opposé de la direction dans laquelle le bloc-cylindres est incliné, et un arbre de transmission intermédiaire (12) s'étendant à travers une paroi du carter d'huile, le plan de jonction entre le carter d'huile et le bloc-cylindres, et une paroi du bloc-cylindres, ledit différentiel et une desdites roues motrices étant couplés de façon fonctionnelle l'un à l'autre par l'intermédiaire dudit arbre de transmission intermédiaire, caractérisé en ce que ledit arbre de transmission intermédiaire possède une extrémité supportée par un palier (29) monté dans un porte-palier (14) qui est Lui-même monté sur le bloc-cylindres d'un côté opposé à l'emplacement du différentiel (D) et l'autre extrémité étant portée par un palier (24) monté sur le carter de différentiel.

2. Système d'entraînement suivant la revendication 1, dans lequel l'arbre de transmission intermédiaire (12) traverse le carter d'huile (8), mais n'est pas porté par ce dernier.

3. Système d'entraînement selon l'une des revendications 1 et 2, dans lequel le porte palier (14) est monté de façon amovible sur le bloc-cylindres.

4. Système d'entraînement selon l'une quelconque des revendications précédentes, dans lequel l'arbre de transmission intermédiaire est seulement supporté par un palier (29) monté dans le porte-palier (14) et par le palier (24) monté dans le carter de différentiel.

5. Système d'entraînement selon l'une quelconque des revendications précédentes, dans lequel l'arbre de transmission intermédiaire (12) possède une extrémité clavetée, dans une position à l'intérieur dudit porte-palier (14), a un élément (Jr1) conduisant à ladite une des roue motrice (Wr) et son autre extrémité clavetée audit différentiel (D) dans une position à l'intérieur dudit carter de différentiel (11).
